# EUROPÄISCHE PATENTANMELDUNG

(11) **EP 4 050 126 A1**
(43) Veröffentlichungstag der Anmeldung: **31.08.2022**
(21) Anmeldenummer: 21020102.6
(22) Anmeldetag: 25.02.2021
(51) Int. Cl.: C25B 1/23, C25B 9/00, C25B 15/08, C01B 32/40, F25J 3/02

(54) **CO2-ELEKTROLYSE MIT EDUKT-BEFEUCHTUNG**

(71) Anmelder: Linde GmbH, 82049 Pullach (DE)
(72) Erfinder: Schödel, Nicole, 81477 München (DE); Peschel, Andreas, 82515 Wolfratshausen (DE); Hentschel, Benjamin, 80689 München (DE)
(74) Vertreter: Fischer, Werner

(57) **Zusammenfassung**

Die Erfindung betrifft ein Verfahren sowie eine Anlage zur elektrolytischen Bearbeitung eines zumindest Kohlenstoffdioxid enthaltenden gasförmigen Roheinsatzstromes (1), wobei der Roheinsatzstrom (1) einen ersten Wasserdampfgehalt aufweist, der Roheinsatzstrom (1) unter Erhalt eines Einsatzstromes (3) einer Befeuchtung (B) unterworfen wird, und der Einsatzstrom (3) unter Erhalt eines zumindest Kohlenstoffmonoxid enthaltenden Rohproduktstromes (4) einer Elektrolyse (E) unterworfen wird, dadurch gekennzeichnet, dass erste Wasserdampfgehalt bei der Befeuchtung (B) kontrolliert auf einen zweiten Wasserdampfgehalt angehoben wird, um den Einsatzstrom (3) mit einer Wasserdampfsättigung von mehr als 80%, 90%, 95% oder 99% zu erhalten.

## Beschreibung

Die Erfindung betrifft ein Verfahren und eine Anlage zur Herstellung von Kohlenstoffmonoxid aus Kohlenstoffdioxid gemäß den Oberbegriffen der unabhängigen Patentansprüche.

### Hintergrund der Erfindung

Kohlenstoffmonoxid, ein wichtiger Ausgangsstoff der chemischen Industrie, kann grundsätzlich mittels verschiedener Verfahren hergestellt werden. Beispielsweise ist eine Dampfreformierung oder eine Trockenreformierung von Erdgas oder anderen kohlenstoffreichen fossilen Ausgangsstoffen möglich.

Angesichts steigender Rohstoffpreise und einer immer relevanter werdenden Nachhaltigkeitsbetrachtung ist die Elektrolyse von Kohlenstoffdioxid eine interessante Alternative zur Herstellung von Kohlenstoffmonoxid, da diese zumindest grundsätzlich mit negativem Kohlenstoffdioxid-Fußabdruck betrieben werden kann und nicht von anderen Rohstoffen abhängig ist.

Je nach Prozessführung können dabei neben Kohlenstoffmonoxid auch weitere Wertprodukte, beispielsweise Sauerstoff und/oder Wasserstoff, gebildet werden.

Beispielsweise laufen bei einer Niedertemperatur-Ko-Elektrolyse an einer Protonen-Austausch-Membran (Proton Exchange Membrane, PEM) vereinfacht dargestellt folgende Reaktionen ab:

| | |
|---|---|
| Kathode: | CO2 + 2 e- + 2 H+ → CO + H2O 2 e- + 2 H+ → H2 |
| Anode: | H2O → ½ O2 + 2 H+ + 2 e- |

Bei diesem PEM-basierten Konzept werden Protonen über eine Membran selektiv von der Anoden- zur Kathodenseite übertragen. An der Kathode konkurrieren dann die Wasserstoff- und die Kohlenstoffmonoxid-Bildungsreaktion, was ein Produktgas mit unterschiedlichem Wasserstoff/Kohlenstoffmonoxid-Verhältnis zur Folge hat. Es kann dabei auch nahezu reines Kohlenstoffmonoxid erzeugt werden.

Derartige Elektrolyseverfahren sind beispielsweise auch in der WO 2016/124300 A1 und der WO 2016/128323 A1 beschrieben. Ferner kann auf einschlägige Fachartikel wie C. Delacourt et al., Journal of the Electrochemical Society, 155 (1) B42-B49 (2008), Q. Lu, F. Jiao, Electrochemical CO2 reduction: Electrocatalyst, reaction mechanism, and process engineering, Nano Energy (29) 439-456 (2016) und T. Haas et al., Nature Catalysis (1), 32-39, 2018, verwiesen werden.

Alternativ kann die Reaktion auch an einer bipolaren Membran erfolgen, wobei kein flüssiger Katholyt verwendet wird, sondern die Kathoden- und Katholyt-Reaktionen direkt an der kathodenseitigen Membran-Elektroden-Einheit (engl. membrane electrode assembly, MEA) erfolgen, wie beispielsweise in der WO 2017/192787 A1 beschrieben. Die dabei ablaufenden Reaktionen lassen sich vereinfacht folgendermaßen zusammenfassen:

| | | |
|---|---|---|
| Kathode: | CO₂ + 2 e⁻ + H₂O | → CO + 2 OH⁻ |
| | (2 H₂O + 2 e⁻ | → H₂ + 2 OH⁻) |
| Membran: | 2 H⁺ + 2 OH⁻ | → 2 H₂O |
| Anode: | H₂O | → ½ O₂ + 2 H⁺ + 2 e |

Bei diesem Konzept wird unter Abwesenheit eines flüssigen Katholyten das CO₂-Feedgas direkt über die kathodenseitige MEA geführt.

In der Regel erfolgt bei keiner der erwähnten Varianten ein vollständiger Umsatz von Kohlenstoffdioxid (und Wasser), so dass anschließend an die Elektrolyse eine Trennung von Kohlenstoffdioxid und Kohlenstoffmonoxid erfolgen muss, um Kohlenstoffdioxid zu rezyklieren.

Eine besonders interessante Anwendung der Kohlenstoffdioxidelektrolyse stellt die Vorortproduktion von Kohlenstoffmonoxid dar, wobei für kleine bis mittlere Produktionsmengen eine membranbasierte Kohlenstoffdioxid-Abtrennung durch die moderaten Investitionskosten sehr vorteilhaft ist. Im kleinen bis mittleren Kohlenstoffmonoxid-Produktionsmaßstab spielt oft auch die Flexibilität der Anlage eine entscheidende Rolle, entweder aufgrund eines sich zeitlich ändernden Kohlenstoffmonoxid-Bedarfs, etwa wenn Kohlenstoffmonoxid als Ausgangsstoff bei Batchprozessen erforderlich ist, oder um am schwankenden Energiemarkt partizipieren zu können um die Kohlenstoffmonoxid-Produktionskosten zu reduzieren. Besonders Niedertemperaturelektrolyseure sind durch ihre schnelle Dynamik ausgesprochen gut für einen flexiblen Betrieb geeignet.

Die Protonenleitfähigkeit einer PEM ist nur gewährleistet, wenn die Membran ausreichend mit Wasser gesättigt ist. Die Zufuhr eines trockenen Gases stellt eine Triebkraft für einen Wasserexport aus der Membran in den Gasstrom dar. Dadurch kann die Membran partiell austrocknen was zu lokalen Überhitzungen durch den erhöhten Membranwiderstand führen kann. Bei GDEs können ähnliche Probleme erwartet werden.

Bei Brennstoffzellen müssen die Feedgase daher befeuchtet werden, besonders weil Wasser das Produkt darstellt und erst über der Transportlänge gebildet wird. Dafür werden unter anderem Membranbefeuchter eingesetzt wobei Feuchtigkeit vom Produktgas oder vom Kühlwasserkreislauf auf das Feedgas übertragen wird.

Daher stellt sich die vorliegende Erfindung die Aufgabe, ein Austrocknen der bei der Elektrolyse eingesetzten Membran oder GDE in ökonomischer Weise effektiver als bisher zu verhindern.

### Offenbarung der Erfindung

Diese Aufgabe wird durch Verfahren und Anlagen gemäß den unabhängigen Patentansprüchen gelöst. Vorteilhafte Ausgestaltungen und Weiterbildungen sind Gegenstand der Unteransprüche sowie der nachfolgenden Beschreibung.

Obwohl im Falle der Elektrolyse flüssiges Wasser das anodenseitige Edukt darstellt und die Membran oder GDE (über den flüssigen Katholyten) damit eigentlich ständig im Kontakt mit Feuchtigkeit ist, hat sich überraschenderweise gezeigt, dass die einseitige Wasserzufuhr nicht ausreichend ist, um die Membran oder GDE feucht zu halten. Stattdessen führt ein trockener kathodenseitiger Gasstrom zu oben genannten Problemen. Der Wassergehalt des der Zelle zugeführten Gasstromes beeinflusst also maßgeblich die Lebenszeit der Membran oder GDE und damit der Elektrolysezelle.

In einem erfindungsgemäßen Verfahren zur elektrolytischen Bearbeitung eines zumindest Kohlenstoffdioxid enthaltenden gasförmigen Roheinsatzstromes, wobei der Roheinsatzstrom einen ersten Wasserdampfgehalt aufweist, wird der Roheinsatzstrom unter Erhalt eines Einsatzstromes einer kontrollierten Befeuchtung und der Einsatzstrom unter Erhalt eines zumindest Kohlenstoffmonoxid enthaltenden Rohproduktstromes einer Elektrolyse unterworfen, wobei der erste Wasserdampfgehalt bei der Befeuchtung auf einen zweiten Wasserdampfgehalt angehoben wird, um den Einsatzstrom mit einer Wasserdampfsättigung von mehr als 80%, 90%, 95% oder 99% zu erhalten.

Insbesondere wird dabei die Elektrolyse unter Verwendung einer Gasdiffusionselektrode (GDE) und/oder einer Membran-Elektroden-Einheit (MEA) durchgeführt.

Vorteilhafterweise wird die Befeuchtung zumindest teilweise unter Verwendung eines Gas-Wasser-Kontaktbehälters durchgeführt. Dies ist eine besonders einfach zu realisierende Ausgestaltung, die mit relativ geringen Investitions- und Betriebskosten verbunden ist.

Die Befeuchtung kann alternativ oder zusätzlich zumindest teilweise unter Verwendung eines Membranbefeuchters durchgeführt werden, wobei insbesondere der Rohproduktstrom und/oder ein wässriger Katholyt und/oder Anolyt in dem Membranbefeuchter an Wasser abgereichert werden. Dadurch ergeben sich Vorteile hinsichtlich der Nachbearbeitung der entsprechenden Ströme, da diese dann bereits an Wasser ärmer sind, so dass stromab nur noch weniger Wasser abgetrennt werden muss. Zudem lässt sich ein Membranbefeuchter grundsätzlich gut steuern und verhindert die Bildung von zweiphasigen Gemischen durch Trennung des Gasraumes von dem Wasser führenden Raum. Somit kann eine Bildung bzw. Mitnahme von Tröpfchen oder Aerosolpartikeln (sog. "Tröpfchen-Mitriss") vermieden werden.

Verdampfungsenthalpie, die bei der Befeuchtung gegebenenfalls aufgebracht werden muss, sofern flüssiges Wasser zum Befeuchten verwendet wird, kann vorteilhafterweise durch Wärmeintegration aufgebracht werden, insbesondere durch Entzug von Wärme stromab der Elektrolyse. Dadurch kann das Verfahren insgesamt energieeffizienter durchgeführt werden und Investitions- und Betriebskosten eingespart werden. Insbesondere kann eine Kühlung stromab der Elektrolyse kleiner ausfallen, da weniger Kühlleistung erforderlich ist, wenn der zu kühlende Strom bereits durch die Befeuchtung vorgekühlt wurde.

Die Befeuchtung kann ferner alternativ oder zusätzlich zu den genannten Möglichkeiten zumindest teilweise durch Zumischung von Heißdampf durchgeführt werden. Dadurch kann zudem Wärme auf den Einsatzstrom übertragen werden, so dass dieser insbesondere auf ein Elektrolysetemperaturniveau erwärmt wird.

Insbesondere in Fällen, in denen der Einsatzstrom auf einem Temperaturniveau, das über einem Elektrolysetemperaturniveau liegt, befeuchtet wird, kann der Einsatzstrom stromauf der Elektrolyse auf das Elektrolysetemperaturniveau abgekühlt werden, wobei dabei kondensierendes Wasser abgetrennt wird. Dadurch ergibt sich in dem Einsatzstrom eine Wasserdampfsättigung, was im Hinblick auf Membranlebensdauer und -performance eine optimale Situation darstellt.

Der Rohproduktstrom wird vorteilhafterweise zumindest teilweise unter Erhalt eines zumindest Kohlenstoffmonoxid enthaltenden Produktstromes und eines Kohlenstoffdioxid enthaltenden Rezyklatstromes einer Separation unterworfen, und der Rezyklatstrom wird dann bevorzugt zumindest teilweise zur Bildung des Roheinsatzstromes und/oder des Einsatzstromes verwendet. Dadurch kann eine erhöhte Rohstoff-Effizienz des Verfahrens insgesamt erzielt werden.

Eine erfindungsgemäße Anlage zur elektrolytischen Bearbeitung eines zumindest Kohlenstoffdioxid enthaltenden, einen ersten Wasserdampfgehalt aufweisenden Roheinsatzstroms umfasst einen Befeuchter, der dazu eingerichtet ist, den ersten Wasserdampfgehalt in dem Roheinsatzstrom kontrolliert auf einen zweiten Wasserdampfgehalt zu erhöhen, um einen Einsatzstrom zu erhalten, der zu mehr als 80%, 90%, 95% oder 99% mit Wasserdampf gesättigt ist, und einen Elektrolyseur, der dazu eingerichtet ist, den Einsatzstrom zumindest teilweise unter Erhalt eines zumindest Kohlenstoffmonoxid enthaltenden Rohproduktstromes zu elektrolysieren. Bevorzugt umfasst die Anlage ferner Mittel, die die Anlage zur Durchführung einer vorteilhaften Ausgestaltung des erfindungsgemäßen Verfahrens, wie soeben und nachfolgend geschildert, ertüchtigen. Die Anlage weist somit Mittel zur Durchführung eines erfindungsgemäßen Verfahrens bzw. vorteilhafter Ausgestaltungen desselben auf und profitiert daher von den Vorteilen des geschilderten Verfahrens in analoger Weise und umgekehrt. Zur Vermeidung von Wiederholungen und Verbesserung des Verständnisses wird daher auf die Wiederholung der entsprechenden Ausführungen verzichtet, auf die jedoch ausdrücklich verwiesen sei.

### Kurze Beschreibung der Figuren

Figur 1 zeigt eine vorteilhafte Ausgestaltung einer erfindungsgemäßen Anlage, in schematischer Darstellung.
Figur 2 zeigt eine weitere vorteilhafte Ausgestaltung einer erfindungsgemäßen Anlage, bei der die Befeuchtung über einen Gas-Flüssig-Kontaktbehälter erfolgt, in schematischer Darstellung.
Figur 3 zeigt eine weitere vorteilhafte Ausgestaltung einer erfindungsgemäßen Anlage, bei der die Befeuchtung über einen Membranbefeuchter erfolgt, in schematischer Darstellung.
Figur 4 zeigt eine weitere vorteilhafte Ausgestaltung einer erfindungsgemäßen Anlage, bei der in dem Membranbefeuchter Wasser aus dem Katholyten auf den Einsatzstrom übertragen wird, in schematischer Darstellung.
Figur 5 zeigt eine weitere vorteilhafte Ausgestaltung einer erfindungsgemäßen Anlage, bei der in dem Membranbefeuchter Wasser aus dem Rohproduktstrom auf den Einsatzstrom übertragen wird, in schematischer Darstellung.
Figur 6 zeigt eine weitere vorteilhafte Ausgestaltung einer erfindungsgemäßen Anlage, bei der die Befeuchtung über Zumischung von Heißdampf erfolgt, in schematischer Darstellung.

Weitere Vorteile und Merkmale der Erfindung werden im Folgenden unter Bezugnahme auf die Zeichnung näher erläutert. Dabei werden sich wiederholende Komponenten aus Gründen der Lesbarkeit nicht wiederholt beschrieben. Vorteile und Merkmale einer Anlage gelten für ein Verfahren, das in seiner technischen Ausgestaltung einer bestimmungsgemäßen Verwendung der Anlage entspricht, sinngemäß entsprechend und umgekehrt. So können Bezugszeichen, die auf eine Anlagenkomponente verweisen, auch auf einen in dieser Anlagenkomponente durchgeführten Verfahrensschritt verweisen.

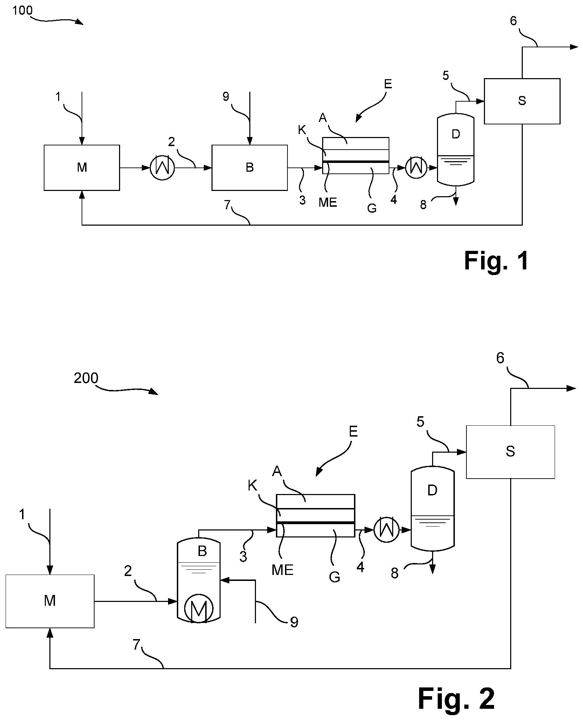

In Figur 1 ist eine vorteilhafte Ausgestaltung einer erfindungsgemäßen Anlage schematisch dargestellt und insgesamt mit 100 bezeichnet. Dabei zeigt Figur 1 ein generelles Konzept für eine Befeuchtung innerhalb eines CO₂- bzw. Ko-Elektrolyseprozesses. Trockenes Makeup-CO₂ bzw. ein zumindest CO₂ enthaltender Roheinsatzstrom 1 wird mit einem CO₂-Rezyklatstrom 7 gemischt und ggf. erwärmt (Strom 2), um nach einer Befeuchtungsstufe B einen zu über 90% mit Wasser gesättigten Einsatzstrom 3 für eine CO₂- oder Ko-Elektrolyse E zu erzeugen. Das nach der Elektrolyse E erhaltene Rohproduktgas 4 wird gekühlt, wobei ggf. Kondensat 8 abgeschieden (Abscheider D) werden muss. Das gekühlte Rohproduktgas 5 wird unter Erhalt eines an CO₂ abgereicherten Produktgases 6) und des bereits erwähnten, an CO₂ angereichten CO₂-Rezyklatstroms 7 einer CO₂-Abtrennung S unterworfen.

Besonders in Fällen, in denen der CO₂-Makeup 1 aus einer kryogenen Produktion entstammt, handelt es sich bei dem Roheinsatzstrom 1 um einen trockenen Gasstrom, welcher ohne Befeuchtung B nicht die Sättigungsbedingungen der Elektrolysezelle E erfüllt.

Im Falle einer adsorptiven oder Membran-basierten CO₂-Abtrennung S ist der resultierende CO₂-Rezyklatstrom 7 zwar feucht, aber trotzdem nur teilgesättigt und der Grad der Wasserdampfsättigung ist undefiniert. Bei einer kryogenen CO₂-Abtrennung wäre der CO₂- Rezyklatstrom 7 trocken, wohingegen ein aus einer Absorption herrührender CO₂- Rezyklatstrom 7 mit Wasser gesättigt wäre. Daher ist es generell vorteilhaft, den CO₂-Feedstrom (Strom 2) über die Befeuchtung bzw. Sättigungsstufe B mit Wasser anzureichern, um einen Einsatzstrom 3 mit definiertem Wasserdampfgehalt zu erhalten.

Der Einsatzstrom 3 wird dann der Elektrolysezelle E in einem Gasraum G zugeführt, der über eine Membran-Elektroden-Einheit bzw. eine Gasdiffusionselektrode ME von einem Katholytraum K getrennt ist. Ferner umfasst die Elektrolysezelle einen Anolytraum A. Katholytraum K und Anolytraum A sind in der Regel jeweils mit einem wässrigen Elektrolyten gefüllt bzw. werden von einem solchen durchströmt. Anolytraum A und Katholytraum K sind durch eine Membran voneinander getrennt, beispielsweise eine Protonen-Austausch-Membran (PEM), einer Anionen-Austausch-Membran (AEM) oder einer anderen selektiv oder unselektiv ionendurchlässigen Membran.

Figur 2 zeigt eine Ausgestaltung der Erfindung, bei der ein ungesättigter Gasstrom (Strom 2), welcher hier aus einer Mischung aus CO₂-Makeup 1 und CO₂-Rezyklatstrom 7 besteht, in einem ggf. beheizten Befeuchter B, der als Gas-Flüssig-Kontaktbehälter ausgeführt ist, mit Wasser 9 so kontaktiert wird, dass der am Austritt des Behälters erhaltene Einsatzstrom 3 zu über 90% mit Wasser gesättigt ist. Zur Verringerung des Wasserbedarfs kann dabei Kondensat 8 aus der der Elektrolyse E nachgeschalteten Kondensatabscheidung D zurückgeführt werden.

Bei diesem Konzept sollte ein Tropfenmitriss aus dem Behälter B durch geeignetes Behälterdesign oder Einbauten vermieden werden. Durch die Verdampfung des Wassers wird dem Behälter B Energie entzogen, welche durch Beheizung zugeführt werden muss.

Der Kontaktbehälter B kann als normaler Behälter oder als Gegenstromkolonne ausgeführt werden, bei der das trockene Gas 2 der Kolonne von unten und das Wasser 9 als Rücklauf von oben zugeführt werden. Das Wasser aus dem Sumpf kann über einen Erhitzer mittels einer Pumpe wieder zum Kolonnenkopf gepumpt werden (in Fig. 2 nicht explizit dargestellt).

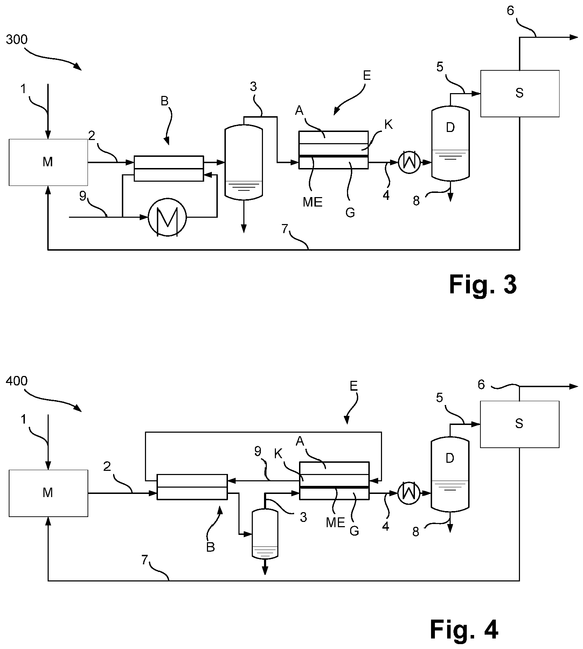

In einer weiteren Ausgestaltung, die in Figur 3 dargestellt und insgesamt mit 300 bezeichnet ist, wird der nicht ausreichend gesättigte Gasstrom 2 über den Befeueuchter B, der hier als Membranbefeuchter ausgeführt ist, im Gegenstrom zu einem Wasserstrom 9 mit Wasser auf über 90% der Wasserdampfsättigung angereichert.

Die Verdunstungsenthalpie führt zu einer Temperaturabnahme auf der Wasserseite. Die Verdunstungsenthalpie muss dementsprechend über einen Erhitzer dem System wieder zugeführt werden. Diese Energie kann sowohl elektrisch, als auch über eine Wärmeintegration mit zu kühlendem Anolyt A oder Katholyt K bereitgestellt werden. Die Wärmeintegration kann auch über die Zwischenkühlung eines evlt. benötigten Rohgasverdichters erfolgen.

Die Befeuchtung B kann auf Elektrolyseeintrittstemperatur oder alternativ auf höherer Temperatur mit anschließender Abkühlung und Kondensation überschüssigen Wassers erfolgen. Im letzteren Fall kann eine 100%ige Wasserdampfsättigung des Einsatzsstromes 3 erreicht werden.

In Figur 4 ist eine weitere Ausgestaltung der Erfindung dargestellt und insgesamt mit 400 bezeichnet. In der Anlage 400 wird zumindest ein Teil des Katholyten (Strom 9) aus dem Katholytraum K im Gegenstrom zu dem nicht ausreichend gesättigten Gasstrom (Strom 2) in einem Membranbefeuchter, unter Erhalt eines an Wasser abgereicherten Katholytstromes, an Wasser abgereichert, wobei der nicht ausreichend gesättigte Gasstrom 2, unter Erhalt eines über 90% gesättigten Einsatzstromes 3, mit Wasser angereichert wird.

In diesem Konzept können mehrere Aufgaben gleichzeitig gelöst werden:
- Befeuchten des Gasstromes (Strom 2)
- Erwärmen des Einsatzstromes 3 auf Elektrolysetemperatur
- Partielles Kühlen des Katholytkreislaufs
- Entfernen von Wasser aus dem Katholytkreislauf K, welches sowohl als Produkt der Elektrolyse E anfällt (z.B. durch Rekombination von Protonen mit Hydroxylionen) als auch durch Protonentransport (mit Hydrathülle) in den Katholytraum K eingeschleppt wird.

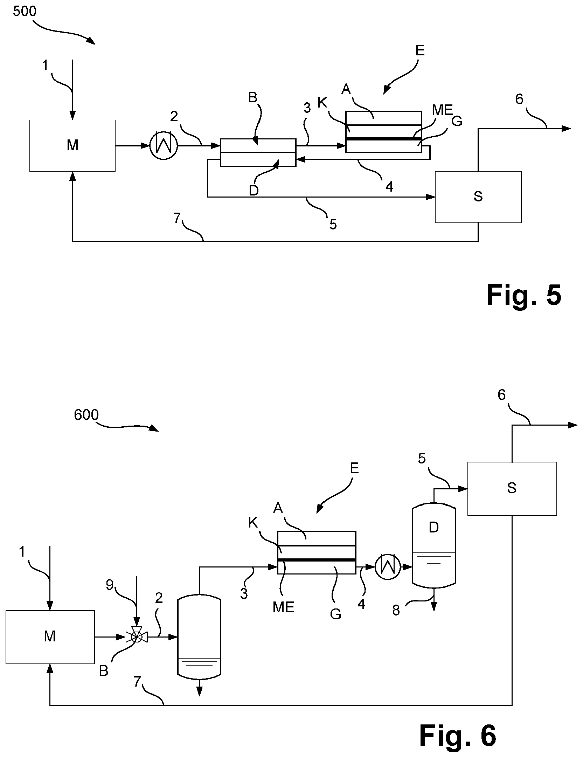

In Figur 5 ist eine weitere Ausgestaltung der Erfindung dargestellt und insgesamt mit 500 bezeichnet. In der Anlage 500, die ebenfalls einen Membranbefeuchter als den Befeuchter B umfasst, wird der Rohproduktstrom 4 im Gegenstrom zu dem nicht ausreichend gesättigten Gasstrom 2 unter Erhalt eines an Wasser abgereicherten Rohproduktstromes 5, an Wasser abgereichert, wobei der nicht ausreichend gesättigte Gasstrom 2, unter Erhalt eines über 90% gesättigten Einsatzstromes 3, mit Wasser angereichert wird.

Durch diese Ausgestaltung 500 der Erfindung ergeben sich folgende Vorteile:
- Befeuchtung des CO₂-Einsatzstromes für eine CO₂- oder Ko-Elektrolyse E zum Schutz der Membran ME.
- Steigerung der Prozesseffizienz der CO₂- oder Ko-Elektrolyse E durch Wärmeintegration.
- Trocknung und Kühlung des Rohproduktstromes 4 in Kombination mit der Befeuchtung B des Einsatzstromes 3.

Eine weitere Ansgestaltung der Erfindung ist in Figur 6 gezeigt und insgesamt mit 600 bezeichnet. In der Anlage 600 werden der Rezyklatstrom 7) und der CO₂-Makeup-Strom 1 mit überhitztem Dampf bzw. Heißdampf 9 gemischt und anschließend auf das Temperaturniveau der Elektrolyse abgekühlt. Das dabei entstehende Kondensat im Strom 2 wird abgetrennt. Der erhaltene Einsatzstrom 3 hat dann eine Wasserdampfsättigung von 100%. Kondensat kann optional wieder dem Dampferzeuger zugeführt werden. Durch den Einsatz von Heißdampf 9 erübrigt sich die in den vorherigen Ausgestaltungen diskutierte Wärmezufuhr zur Kompensation der Verdampfungsenthalpie.

Es sei hier ausdrücklich betont, dass der Befeuchter auch in Form einer Kombination der hier diskutierten Ausgestaltungen 200 bis 600 ausgeführt sein kann, so dass beispielsweise ein Membranbefeuchter mit verschiedenen wasserhaltigen Strömen betrieben werden kann (z.B. eine Teilmembran pro Strom) oder auch Kontaktbehälter und/oder Membranbefeuchter und/oder Heißdampf parallel zueindänder eingesetzt werden, so dass sich eine je nach Prozessführung bzw. Betriebspunkt flexibel anpassbare Steuerung des Befeuchters ergeben kann.

Ferner kann vorgesehen sein, nur den Frischeinsatz 1 zu befeuchten, wenn der Rezyklatstrom 7 ausreichend mit Wasserdampf gesättigt erhalten wird. Ferner können an geeigneten Stellen Erhitzer, Abscheider, Ventile, Pumpen, Verdichter und ähnliche Anlagenkomponenten vorgesehen sein, ohne hier explizit diskutiert zu sein.

Es versteht sich, dass manche Prozessstufen bzw. Anlagenkomponenten auch in anderer, beispielsweise umgekehrter Reihenfolge zueinander angeordnet sein können, wo dies sinnvoll ist.

## Patentansprüche

1. Verfahren zur elektrolytischen Bearbeitung eines zumindest Kohlenstoffdioxid enthaltenden gasförmigen Roheinsatzstromes (1), wobei
der Roheinsatzstrom (1) einen ersten Wasserdampfgehalt aufweist,
der Roheinsatzstrom (1) unter Erhalt eines Einsatzstromes (3) einer Befeuchtung (B) unterworfen wird, und
der Einsatzstrom (3) unter Erhalt eines zumindest Kohlenstoffmonoxid enthaltenden Rohproduktstromes (4) einer Elektrolyse (E) unterworfen wird,
**dadurch gekennzeichnet, dass** der erste Wasserdampfgehalt bei der Befeuchtung (B) kontrolliert auf einen zweiten Wasserdampfgehalt angehoben wird, um den Einsatzstrom (3) mit einer Wasserdampfsättigung von mehr als 80%, 90%, 95% oder 99% zu erhalten.

2. Verfahren nach Anspruch 1, wobei die Elektrolyse (E) unter Verwendung einer Gasdiffusionselektrode (engl. gas diffusion electrode; GDE) und/oder einer Membran-Elektroden-Einheit (engl. membrane-electrode-assembly; MEA) (ME) durchgeführt wird.

3. Verfahren nach einem der vorstehenden Ansprüche, wobei die Befeuchtung (B) zumindest teilweise unter Verwendung eines Gas-Wasser-Kontaktbehälters durchgeführt wird.

4. Verfahren nach einem der vorstehenden Ansprüche, wobei die Befeuchtung (B) zumindest teilweise unter Verwendung eines Membranbefeuchters durchgeführt wird.

5. Verfahren nach Anspruch 4, wobei der Rohproduktstrom (4) und/oder ein wässriger Katholyt (K) und/oder Anolyt (A) in dem Membranbefeuchter an Wasser (9) abgereichert wird.

6. Verfahren nach einem der vorstehenden Ansprüche, wobei Verdampfungsenthalpie durch Wärmeintegration aufgebracht wird, insbesondere durch Entzug von Wärme stromab der Elektrolyse (E).

7. Verfahren nach einem der vorstehenden Ansprüche, wobei die Befeuchtung (B) zumindest teilweise durch Zumischung von Heißdampf durchgeführt wird.

8. Verfahren nach einem der vorstehenden Ansprüche, wobei, wenn der Einsatzstrom (3) auf einem Temperaturniveau, das über einem Elektrolysetemperaturniveau liegt, befeuchtet wird, der Einsatzstrom (3) stromauf der Elektrolyse (E) auf das Elektrolysetemperaturniveau abgekühlt wird, wobei dabei kondensierendes Wasser abgetrennt wird.

9. Verfahren nach einem der vorstehenden Ansprüche, wobei der Rohproduktstrom (4) zumindest teilweise unter Erhalt eines zumindest Kohlenstoffmonoxid enthaltenden Produktstromes (6) und eines Kohlenstoffdioxid enthaltenden Rezyklatstromes (7) einer Separation (S) unterworfen wird, und wobei der Rezyklatstrom (7) zumindest teilweise zur Bildung des Roheinsatzstromes (1) und/oder des Einsatzstromes (3) verwendet wird.

10. Anlage (100, 200, 300, 400, 500, 600) zur elektrolytischen Bearbeitung eines zumindest Kohlenstoffdioxid enthaltenden Roheinsatzstroms (1), mit einem Befeuchter (B), der dazu eingerichtet ist, einen ersten Wasserdampfgehalt in dem Roheinsatzstrom (1) kontrolliert auf einen zweiten Wasserdampfgehalt zu erhöhen, um einen Einsatzstrom (3) zu erhalten, der zu mehr als 80%, 90%, 95% oder 99% mit Wasserdampf gesättigt ist, und einem Elektrolyseur (E), der dazu eingerichtet ist, den Einsatzstrom (3) zumindest teilweise unter Erhalt eines zumindest Kohlenstoffmonoxid enthaltenden Rohproduktstromes (4) zu elektrolysieren.

11. Anlage (100, 200, 300, 400, 500, 600) nach Anspruch 10, ferner mit Mitteln, die die Anlage (100, 200, 300, 400, 500, 600) zur Durchführung eines Verfahrens nach einem der Ansprüche 1 bis 9 ertüchtigen.
